# EUROPEAN PATENT APPLICATION

(11) **EP 4 130 699 A1**
(43) Date of publication of application: **08.02.2023**
(21) Application number: 21189769.9
(22) Date of filing: 05.08.2021
(51) Int. Cl.: G01L 19/00, F24D 3/10, F24D 19/10

(54) **A PRESSURE SENSOR FOR MONITORING AN EXPANSION VESSEL**

(71) Applicant: Automaatio-Center AC OY, 33540 Tampere (FI)
(72) Inventor: LIIMATAINEN, Simo, FI-33540 TAMPERE (FI)
(74) Representative: Koivisto, Harri Kristian

(57) **Abstract**

A pressure sensor for monitoring an expansion vessel (10) on a closed liquid circulation system, comprising a threaded connector (78) configured to be attached on a gas filling valve (71) of an expansion vessel (10); a second gas filling valve (73) and a channel (72) connecting the gas filling valve (71) and the second gas filling valve (73), wherein the second gas filling valve (73) is configured for filling the expansion vessel (10) via the channel (72); and a pressure sensor configured in the channel (72) for reading a pressure of the expansion vessel (10).

## Description

### BACKGROUND

Closed liquid circulation systems are used for transferring heat along various parts of a structure. One example of the closed liquid circulation system is a heating system for a building that circulates water or other liquid to heat the building. The liquid itself is subject to thermal expansion, while not being compressible. An expansion vessel having a gas-filled portion is attached to the system for compensating the liquid's volume changes at various temperatures. The gas-filled portion acts as a cushion to the expanding liquid and is able to compensate sudden pressure variations in the system. One example of the expansion vessel comprises a flexible diaphragm configured to separate a liquid portion and the gas-filled portion of the expansion vessel. The diaphragm is configured to keep the gas from diluting into the liquid and to keep bubbles emerging in the closed liquid circulation system.

In one example the circulating liquid is water. Sometimes the closed liquid circulation system may have a minor leak. Quick way to fix the situation is to add some fresh water to the closed liquid circulation system, thereby providing continuous heating to the building. The problem with added fresh water is, that fresh water usually comprises oxygen that oxidates the inner surface of the piping, i.e. causing the piping to rust. As soon as the oxygen has bonded with iron or other piping material, the circulating water is mostly free of oxygen molecules. Any additional oxygen in the closed liquid circulation system would contribute to corrosion and/or rust.

Small malfunctions in a building heating system must be addressed quickly to prevent the building temperature to drop during the winter as that may lead to even more serious problems. In a typical scenario a janitor checks the heating systems and discovers a lack of pressure in the closed liquid circulation system.

By adding some fresh water the heating system resumes normal operation and the situation appears to be solved. However, the underlying reason for the lack of pressure remains unsolved. The scenario may be repeated multiple times, always adding fresh water and oxygen to the closed liquid circulation system. This causes severe consequences as increased corrosion.

One possible problem causing the lack of pressure is the minor leak. If this is not addressed, the water may damage the building structure for a long period of time.

Another possible problem is a malfunction in the expansion vessel. For example, the flexible diaphragm may have ruptured or a valve in the expansion vessel leaks. This may cause the expansion vessel to be completely filled with liquid, wherein the expansion vessel may no longer compensate the thermal expansion in the closed liquid circulation system. As the liquid is heated, the liquid being expanded bleeds through pressure relief valve into a drain. When the liquid cools, the pressure drops down to a level below proper operation.

The lack of monitoring devices in the closed liquid circulation system allows fixing the system repeatedly in a less than optimal manner, not fixing the root cause of the problem. The closed liquid circulation systems are subjected to accelerated corrosion. Repairing plumbing and heating system pipes on the whole building is a very exhaustive and expensive process. Furthermore, as the fresh water may be added repeatedly to the closed liquid circulation system without any trace of doing so, this practise may be repeated without anyone claiming responsibility for the corroded piping.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

A pressure sensor for monitoring an expansion vessel on a closed liquid circulation system is disclosed hereinafter. The expansion vessels usually comprise a filling valve for adding or adjusting the gas filled portion of the expansion vessel. The pressure sensor is a stand-alone device that has data transmission capability connectable to a system for measuring the expansion vessel and/or the closed liquid circulation system.

The filling valve of the expansion vessel is often a Shrader valve. The pressure sensor is configured to connect onto an outer thread of the filling valve. In the example of the Schrader valve, the pressure sensor comprises a member configured to push a poppet valve to an always open state, when the pressure sensor is positioned on the outer thread of the gas filling valve. The pressure sensor comprises a second gas filling valve, that is connected to the expansion vessel gas filling valve by a channel. The pressure measurement of the expansion vessel is conducted from the channel that has the same pressure as the gas filled portion of the expansion vessel. The second gas filling valve may be similar to that fitted in the expansion vessel.

The closed liquid circulation system reacts to changes in its environment, such as the building heating system. The sensor readings change accordingly. The system for monitoring the expansion vessel and/or the closed liquid circulation system monitors the sensor readings and indicates a malfunction, if allowable values are exceeded. Values of the first flow meter and the pressure sensor for monitoring the expansion vessel change cyclically during normal heating cycles. Sometimes, for example during a valve closing within the closed liquid circulation system, the pressure sensor may detect a peak pressure. However, this should be detected as normal operation.

Each closed liquid circulation system may have its own characteristics, that may be detected and applied to defining the allowable values. The monitoring system enables detecting malfunctions in the operation of the expansion vessel. The expansion vessel, or any component thereof, may then be repaired, before repeatedly adding fresh water to the closed liquid circulation system. The monitoring system thus saves the piping from premature corrosion.

The monitoring system may log any changes in the closed liquid circulation system. Adding fresh water to the closed liquid circulation system may appear in the system log. Mere knowledge of this monitoring may prevent the maintenance personnel from adding fresh water before checking further the components of the closed liquid circulation system. The monitoring system provides information for detecting various malfunctions. For example, leak in the closed liquid circulation system, ruptured diaphragm in the expansion vessel or wrong system pressure may be detected from the sensor readings.

Many of the attendant features will be more readily appreciated as they become better understood by reference to the following detailed description considered in connection with the accompanying drawings. The embodiments described below are not limited to implementations which solve any or all the disadvantages of known pressure sensors.

### BRIEF DESCRIPTION OF THE DRAWINGS

The present description will be better understood from the following detailed description read in light of the accompanying drawings, wherein
FIG. 1 illustrates schematically one exemplary embodiment of a closed liquid circulation system with a system for monitoring an expansion vessel;
FIG. 2 illustrates schematically one exemplary embodiment of the expansion vessel and sensors for monitoring the expansion vessel;
FIG. 3a illustrates schematically a cross-sectional view of one exemplary embodiment of the pressure sensor above the expansion vessel;
FIG. 3b illustrates schematically a cross-sectional view of one exemplary embodiment of the pressure sensor connected to the expansion vessel;
FIG. 4a illustrates schematically a cross-sectional view of one exemplary embodiment of an adjustable member extending through a threaded connector of the pressure sensor;
FIG. 4b illustrates schematically a cross-sectional view of one exemplary embodiment of the adjustable member in an extended position;
FIG. 5 illustrates as a flowchart one exemplary embodiment of steps of a method for monitoring the expansion vessel.

Like reference numerals are used to designate like parts in the accompanying drawings.

### DETAILED DESCRIPTION

The detailed description provided below in connection with the appended drawings is intended as a description of the present embodiments or examples and is not intended to represent the only forms in which the present embodiment or example may be constructed or utilized. However, the same or equivalent functions and sequences may be accomplished by different examples.

Although the present embodiments or examples are described and illustrated herein as being implemented to a liquid heating system in a residential building, the system described is provided as an example and not a limitation. As those skilled in the art will appreciate, the present examples are suitable for application in a variety of different types of closed liquid circulation systems, such as liquid cooling systems. The closed liquid circulation system and the operation of an expansion vessel 10 are described hereinafter to provide context for the pressure sensor 61.

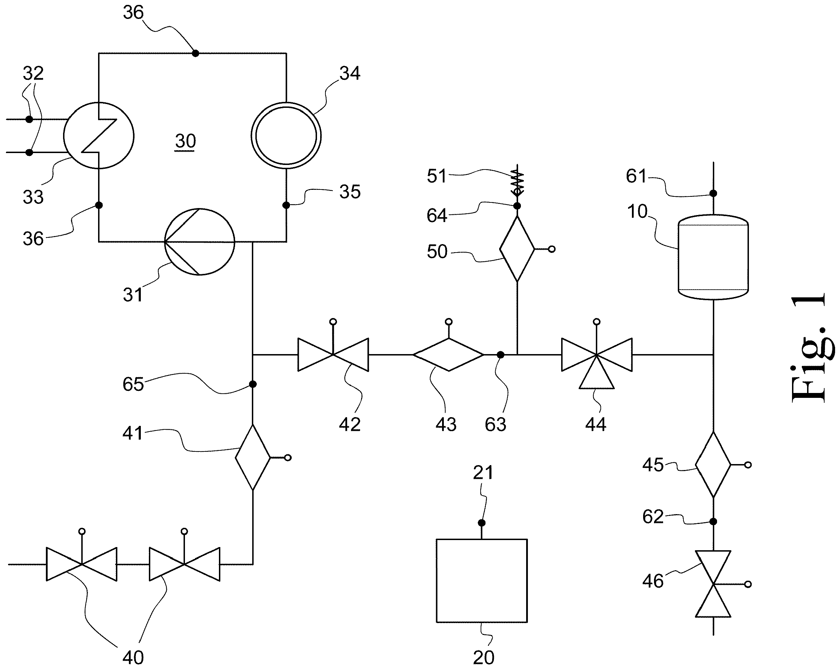

FIG. 1 illustrates schematically one example of an embodiment having the system configured to operate with a building's heating system 30, for example a central heating system. The closed liquid circulation system comprises in this example the heating system 30. The heating process is often cyclical. A heat source is connected via piping 32 to a heat exchanger 33 that provides thermal energy into the closed liquid circulation system. The heat source may be district heat, local heating system such as oil heating, ground heating system or other suitable heating system for a building. A circulator pump 31 is configured to circulate the liquid in the closed liquid circulation system. A major portion of the thermal energy is released from the closed liquid circulation system by heater assembly 34, comprising for example multiple radiators or floor heating systems.

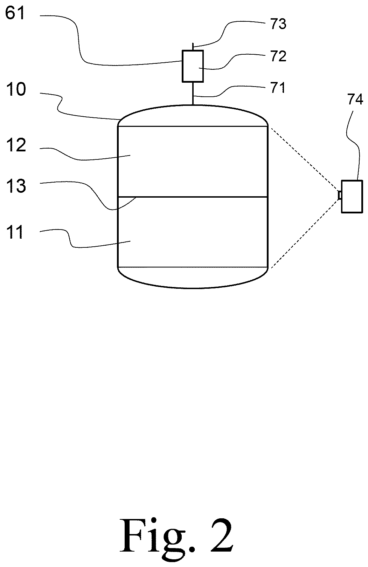

The pressure in the closed liquid circulation system varies during its normal operation. Changes in the liquid's temperature affect the volume, fluidity and flow of the liquid. An expansion vessel 10 is connected to the closed liquid circulation system to compensate the pressure variations. One example of the expansion vessel 10 is schematically illustrated in FIG. 2. During the normal operation, a lower portion 11 of the expansion vessel 10 is connected via the piping to the heating system 30, being filled with the liquid that circulate sin the system. An upper portion 12 of the expansion vessel 10 is filled with gas. In one embodiment, a flexible diaphragm 13 separates the upper portion 12 and the lower portion 11 of the expansion vessel 10. The flexible diaphragm may be made of butyl rubber, EPDM or other suitable material. In one embodiment, liquid and gas are separated by a bladder-type diaphragm. In one embodiment, liquid and gas are in direct contact.

In one example the upper portion 12 is filled with air. In one example the upper portion 12 is filled with nitrogen, for preventing oxygen dissolving into the liquid. The flexible diaphragm 13 may allow molecules of oxygen to pass through. Filling the upper portion 12 with gas having no oxygen reduces the risk of corroding the internal surfaces of the closed liquid circulation system. In one exemplary embodiment, the expansion vessel 10 is configured to operate with the lower portion 11 being filled with gas and the upper portion being filled with liquid. The liquid does not compress during the pressure variations. The upper portion 12, being filled with gas, is compressible.

Sometimes the pressure of the closed liquid circulation system is released to ambient level, for example for replacing components or for other maintenance procedures. Before adding liquid to the closed liquid circulation system, the gas-filled portion 12 of the expansion vessel 10 is pre-pressurized to equal the static pressure of the liquid at the expansion vessel 10 location. This prevents cold liquid from partially compressing the gas in the expansion vessel 10. The flexible diaphragm 13 only begins to compress when the liquid temperature rises. The final pressure range of the gas-filled portion may be adjusted after full cycle of operation.

A pressure relief valve 51 is configured to release liquid from the closed liquid circulation system, if the pressure exceeds the limit set on the pressure relief valve 51. If the expansion vessel 10 is properly adjusted to function within the system, liquid will not escape through the pressure relief valve 51. However, various malfunctions or wrong pressure in the gas-filled portion 12 may cause that the expansion vessel 10 is not capable for fully compensating volume changes of the liquid. If the gas-filled portion 12 is pressurized too low, it may compress too much and the overall pressure of the closed liquid circulation system gets too high - activating the pressure relief valve 51. Alternatively, the flexible diaphragm 13 may be damaged or a filling valve 71 of the expansion vessel 10 may leak. Again, the pressure relief valve 51 would release portion of the liquid. When the liquid cools during the heating cycle, the overall pressure of the closed liquid circulation system drops, possibly to a level inadequate to provide reliable heating to all parts of the building. As a maintenance person would see only the drop of pressure as indication of the problem, a quick solution would be to add some fresh liquid, such as fresh water from a water supply network via the filling extension by dual filling valves 40, to the closed liquid circulation system. As each heating cycle would lose a bit more of the liquid, the maintenance person may continue adding fresh water repeatedly. At the same time, oxygen is added to the otherwise closed system. Oxygen corrodes the closed liquid circulation system from inside, thus reducing the system lifetime significantly. The circulating liquid may be water, water with additives or an oil-based liquid. Large buildings usually have water as the liquid as it is readily available and may be added from the water network.

The heating power may be adjusted by the liquid temperature and the speed of the circulating liquid. The heating system may be balanced to provide even temperatures throughout the building. The thermal energy carried by the liquid should not be exhausted during the early stage of the cycle - each space or room should receive sufficient thermal energy. As the outside temperature varies, so does the heating need of each individual space. The heating system is constantly adjusted by thermostats to meet the heating demand. During the summertime, the warm period, the heating system may be entirely shut off. Thermostats and other valves closing and opening may cause pressure shocks to the closed liquid circulation system. The expansion vessel 10 is configured to buffer the pressure variations, thereby providing balanced liquid flow to the system.

Malfunctions of the expansion vessel 10 may be difficult to detect. The system disclosed herein provides a solution for monitoring the expansion vessel 10. A first flow meter 43 is connected to a first section of the piping terminating to the expansion vessel 10, configured to measure a flow to/from the expansion vessel 10. Under normal operation, the liquid does not disappear from the closed liquid circulation system as it has passed the first flow meter 43. However, if the pressure rises above the predefined safe level, the pressure relief valve 51 opens and allows the liquid to escape from the closed liquid circulation system. In one embodiment, a third flow meter 50 is configured to measure the amount of liquid having passed through the pressure relief valve 51. A valve 42 may be used to separate the first section of the piping, while simultaneously stopping the operation and/or depressurizing of the closed liquid circulation system.

In one embodiment, a bleed valve 46 is connected to the same first section of the piping, terminating to the expansion vessel 10. In one embodiment, a fourth flow meter 45, a bleed valve flow meter, is configured to measure the amount of liquid having passed through the bleed valve 46. In one embodiment, two-way valve 44 is configured to separate the first section of the piping from the closed liquid circulation system, for example during maintenance. The two-way valve 44 may be used to attach a temporary expansion vessel or similar arrangement to maintain safe operation of the closed liquid circulation system when the expansion vessel 10 is disengaged.

A pressure sensor for monitoring the expansion vessel 61 is connected to the closed liquid circulation system, configured to measure an internal pressure of the closed liquid circulation system. The pressure sensor for monitoring the expansion vessel 61 readings may be adjusted to match the pressure at the expansion vessel 10. In the present embodiment, the pressure sensor for monitoring the expansion vessel 61 is positioned at the first section of the piping, more particularly at the gas-filled side 12 of the expansion vessel 10. The first pressure sensor 61 is connected to the gas filling valve 71 of the expansion vessel. In one embodiment, the gas filling valve 71 is a Schrader valve.

A controller 20 is configured to receive flow information from the first flow meter 43 and pressure information from the pressure sensor for monitoring the expansion vessel 61. The controller 20 comprises a transceiver 21 configured to receive and/or transmit information either by wired or wireless connection. Any valve, meter or device in the present system may be equipped with communication means, such as the wireless or wired transceiver. The controller 20 comprises a processor and a memory configured to store a program to be executed by the processor. Portion of the controller 20 functionality may be distributed to a cloud computing environment.

The controller 20 is configured to compare the internal pressure of the closed liquid circulation system and the flow information of the first flow meter 43 to defined limits. In one embodiment, the controller 20 is configured to receive information from multiple flow meters and/or pressure sensors being connected to measure information from the closed liquid circulation system. In one embodiment, the defined limits are preset according to simulations or calculations run on the closed liquid circulation system, about various operational scenarios. In one embodiment, the defined limits are configured to adapt to the system's behaviour. If the defined limits are exceeded, the controller 20 is configured to indicate a malfunction.

The malfunction may be at the expansion vessel 10, it may be a blockage or a leak somewhere in the closed liquid circulation system, or malfunction in the circulation pump 31. The system may comprise various sensors configured to provide data from different sections of the closed liquid circulation system. In one embodiment, the system comprises a temperature sensor 36 configured to send temperature of the liquid to the controller 20. In the example of FIG.1 the system comprises two temperature sensors 36, one before and one after the heat exchanger 33. The system may comprise pressure sensor 35 configured to measure the pressure at any point in the heater assembly 34.

One example of a detected malfunction is the missing flow measured by the first flow meter 43. If the diaphragm 13 has ruptured, the upper portion 12 of the expansion vessel may have been filled with the liquid. Therefore, the expansion vessel 10 does not compensate the pressure changes and there is no detectable flow from/to the expansion vessel 10. Alternatively, the measured flow may react to the temperature changes with different response than defined as normal. The actual problem may be analysed by examining further sensor readings. Wrong pressure set in the gas-filled side 12 of the expansion vessel 10 may cause erratic behaviour to the entire system. Sometimes a leak in the gas filling valve 71 or in the gas-filled side 12 of the expansion vessel 10 causes a loss of pressure that must be corrected by additional gas, for example nitrogen. The diaphragm 13 may allow gas to pass through and to dissolve in the liquid.

In one embodiment, the system monitors any addition of liquid via the filling extension. The system comprises a second flow meter 41 configured to detect the flow of liquid at a filling extension of the closed liquid circulation system and send the information of the flow to the controller 20. If the amount of liquid increases via the filling extension, the information may be properly logged into the controller 20 memory. As the action of adding oxygen to the closed liquid circulation system as a quick repair is very undesirable, merely the knowledge of the addition being logged may prevent someone from doing it.

The status of the expansion vessel 10 is in one embodiment detected by a thermal camera 74 from outside the expansion vessel 10. The thermal camera 74 is configured to capture an image of the expansion vessel 10 and send the captured image to the controller 20. In many cases the outer shell of the expansion vessel 10 is made of metal that conducts heat well. This causes the temperature difference between the liquid and the gas to appear in the thermal image, often as a horizontal line. In one embodiment, the controller 20 comprises an image recognition tool configured to detect the height of the thermal difference visible on the outer surface of the expansion vessel. The expansion vessel should always have at least small amount of gas, visible at the thermal difference. If the thermal difference is not visible, the controller 20 sets up an error message or a fault code that may be logged into a database and/or presented in a user interface.

In one embodiment, the system comprises the database comprising information of at least one of the group comprising the first flow meter 43, the second flow meter 41, the third flow meter 50 and the temperature sensor 36. In one embodiment, the database comprises the information as time stamped. The information may be presented as time series and the relation between the sensors may be further analysed by the controller 20 or by any processor being configured to receive information from the database. The database may be resident in the memory of the controller 20. In one embodiment, the controller 20 transmits information to external database, wherein the database may reside in a cloud computing environment.

The closed liquid circulation system operates in conjunction with the larger macro system it is connected to - for example with the building and the heating system. Other exemplary embodiments for the closed liquid circulation system are various industrial systems or large engine fluid circulation systems. Often the closed liquid circulation system has its own signature behaviour on how it responds to temperature variations, pressure variations and/or response to peak pressure related to any valve operation. In one embodiment, the system comprises an artificial intelligence algorithm that is configured to learn from the database information the normal behaviour of the expansion vessel 10. The artificial intelligence algorithm is in one example a neural network configured to detect pattern or multiple patterns in the database information as a function of time. The artificial intelligence algorithm improves the pattern detection with more database information. According to the detected behavioural pattern, the artificial intelligence algorithm defines limits of the normal behaviour. The normal behaviour is based on the database information containing only information that has been validated to have been collected under normal operation of the closed liquid circulation system. In one embodiment, the artificial intelligence algorithm focuses on the behaviour of the expansion vessel 10 under normal operation. The pressure information, the temperature information and the flow information from the first flow meter 43 may be used to define the characteristic performance of the expansion vessel 10. The processor configured to execute the artificial intelligence algorithm may be that of the controller 20 or a processor configured to receive information from the database.

In one embodiment, the system performs an artificial intelligence technique to identify a suspicious abnormality in the information received from at least one of the flow information, the pressure information and the temperature information. The artificial intelligence technique is for example a neural network configured to detect pattern in the expansion vessel 10 characteristics. The neural network differentiates the normal behaviour and abnormal behaviour, wherein the abnormality occurs outside the normal pattern.

In one embodiment, the controller 20 is configured to commence the artificial intelligence learning algorithm when the controller has detected the flow of liquid at the filling extension. The flow of liquid at the filling extension is detectable by the second flow meter 41. The characteristics of the closed liquid circulation system is dependent, in addition to the measured information, by the total amount of liquid in the system, which has an effect to the liquid pressure. In some circumstances adding liquid to the system is required. The controller 20 detects the addition and starts the learning algorithm either by its own processor or, alternatively, it may send a command for the external processor to start the learning algorithm.

In one embodiment, the controller 20 is configured to start the artificial intelligence learning algorithm when the controller 20 has detected an increase in the internal pressure of the closed liquid circulation system. One example for detecting the increase is the pressure information read from the pressure sensor for monitoring the expansion vessel 61. The pressure may suddenly increase by adding gas into the expansion vessel 10 via the gas filling valve 71.

Sometimes the expansion vessel 10 requires adjustment in the gas pressure. The pre-installed pressure may not be optimal for the closed liquid circulation system and the correct pressure may be discovered only after full installation and multiple heating cycles.

The database is configured to store information about the use, maintenance and behaviour of the closed liquid circulation system and the expansion vessel 10. All changes in the system are registered without maintenance person's involvement, even the undesired actions such as additions of fresh water. The system is able to detect leaks inside the closed liquid circulation system, changes in the system balance or substantial increases in the energy consumption in relation to external temperature.

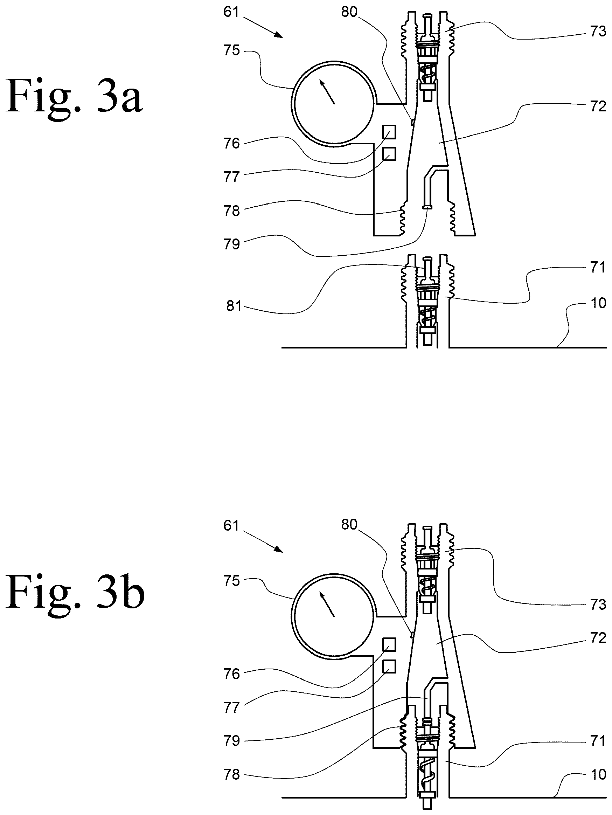

FIG. 3a illustrates schematically a cross-sectional view of one exemplary embodiment of the pressure sensor 61 above the expansion vessel 10 and a gas filling valve 71. FIG. 3b illustrates the pressure sensor 61 being connected to the gas filling valve 71.

The pressure sensor for monitoring the expansion vessel 61 is connectable to the gas filling valve 71 of the expansion vessel 10. The pressure sensor for monitoring the expansion vessel 61 comprises a second gas filling valve 73 and a channel 72 connecting the gas filling valve 71 and the second gas filling valve 73. The second gas filling valve 72 is configured for filling the expansion vessel 10 via the pressure sensor for monitoring the expansion vessel 61. The pressure sensor for monitoring the expansion vessel 61 is in this example a stand-alone device that is connectable to the gas filling valve 71, for example the Schraeder valve. In one embodiment, the pressure sensor for monitoring the expansion vessel 61 comprises a threaded connector that may be tightened onto a cap thread of the gas filling valve 71. The threaded connector comprises a valve core push member that keeps the air filling valve open when the pressure sensor for monitoring the expansion vessel 61 is tightened onto the gas filling valve 71. As the second gas filling valve 73 remains closed, the pressure of the expansion vessel 10 is present on the channel 72, which is measured by a pressure sensor 80 for reading a pressure of the expansion vessel 10. The pressure sensor for monitoring the expansion vessel 61 may be left on the gas filling valve 71, as further gas is added to the expansion vessel 10 via the second gas filling valve 73.

The pressure sensor for monitoring the expansion vessel 61 comprises a threaded connector 78 configured to be attached on the gas filling valve 71. In the FIG. 3a and FIG. 3b the threaded connector 78 is configured for the Schraeder valve, but alternative threaded connectors 78 may be arranged for various gas filling valves 71.

In one embodiment, the pressure sensor for monitoring the expansion vessel 61 comprises a member 79 extending through the threaded connector 78. The member is configured to push a poppet valve 81 of the gas filling valve 71 when the pressure sensor for monitoring the expansion vessel 61 is positioned on the gas filling valve 71. FIG. 3b illustrates the member 79 pushing the poppet valve 81 down, as the pressure sensor for monitoring the expansion vessel 61 has been rotated on the outer thread of the Schrader valve 71. The gas filling valve 71 is open when the poppet valve 81 is pushed down. The pressure sensor for monitoring the expansion vessel 61 may comprise additional connecting means to improve the contact. The threaded connector 78 may be sealed with at least one O-seal against the gas filling valve 71.

In one embodiment, the pressure sensor for monitoring the expansion vessel 61 comprises a transceiver 77 for communicating the measurement data to the controller 20. The pressure sensor for monitoring the expansion vessel 61 may be a stand-alone device configured to be added to the system for monitoring the expansion vessel 10. In one embodiment, the pressure sensor for monitoring the expansion vessel 61 comprises a processor and a memory 76 for storing the measured information. The pressure sensor for monitoring the expansion vessel 61 may store the measured information and transfer the information as a batch to the controller 20.

In one embodiment, the pressure sensor for monitoring the expansion vessel 61 comprises a visual indicator 75 of the pressure reading. This enables the maintenance personnel to quickly check the reading without accessing the controller 20 info, more sophisticated fault analysis provided by the controller 20or the cloud computing environment.

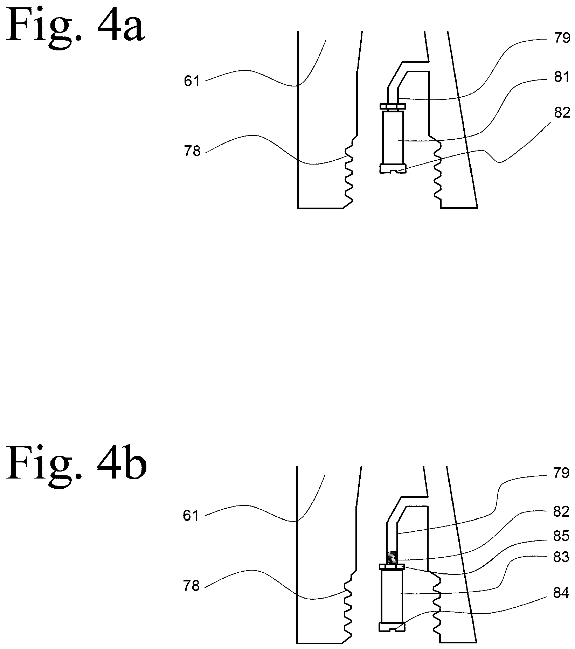

FIG. 4a illustrates schematically a cross-sectional view of one exemplary embodiment of an adjustable member 79 extending through a threaded connector 78 of the pressure sensor 61. FIG. 4a illustrates the adjustable member 79 in in a retracted position and FIG. 4b in an extended position. The pressure sensor 61 comprises means 81, 83 for adjusting the distance between the contact surface of the member 79 and the poppet valve 81. The gas filling valves 71 of various expansion vessels 10 may have different arrangements for the poppet valve 81. Therefore, in one embodiment, the distance the member 79 extends through the threaded connector 78 is adjustable.

In this example the adjustment is arranged inside the pressure sensor 61 body as a thread 82 and a sleeve 83, configured to be rotated on the thread 82. When the adjustment is inside the body, it should be prepared before rotating the pressure sensor 61 to be in contact with the poppet valve 81. A locking nut 85 may be used to secure the sleeve 83 in place when the pressure sensor 61 is rotated. The sleeve 83 comprises a groove 84 for rotating the sleeve by a screwdriver. The adjustment means may secure that the poppet valve 81 is properly pushed inside the gas filling valve 71, when the pressure sensor 61 is secured onto the outer thread.

The means for adjusting the distance may be brought outside the pressure sensor 61 body. In one embodiment, the sleeve 83 is fixedly connected to the body of the pressure sensor 61 and the member 79 extends, as a straight piece, through the body. The member 79 may be rotated on the thread of the fixed sleeve 83 to protrude further towards the poppet valve 81.

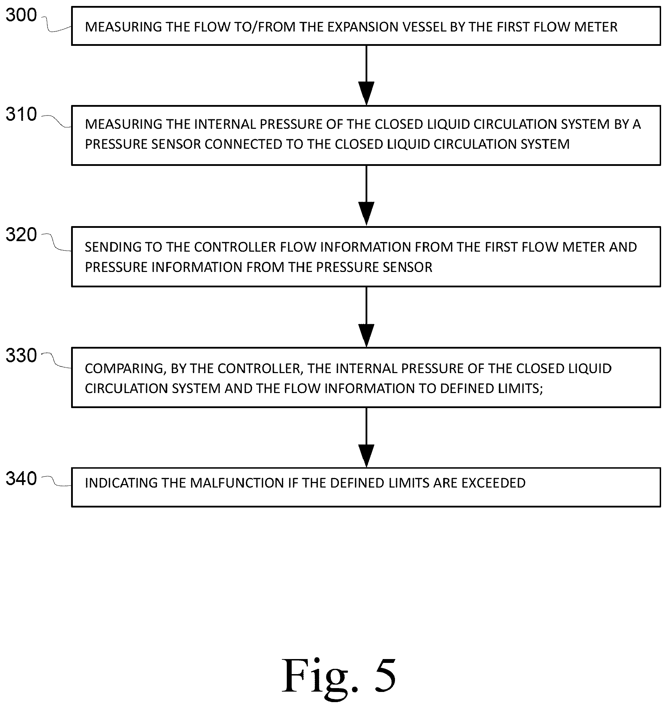

FIG. 5 illustrates as a flowchart steps of the method for monitoring the expansion vessel 10. Step 300 comprises measuring the flow to/from the expansion vessel 10 by the first flow meter 43. Step 310 comprises measuring the internal pressure of the closed liquid circulation system by the pressure sensor for monitoring the expansion vessel 61 connected to the closed liquid circulation system. In the illustrated example the pressure sensor for monitoring the expansion vessel 61 is connected to the gas-filled side 12 of the expansion vessel 10. Alternatively, or in addition, the pressure may be measured from the closed liquid circulation system. As the pressure may vary in the closed liquid circulation system due to height difference of measuring points or by the effect of the connected devices, the pressure information may be adjusted to conform the expansion vessel 10 status. In one embodiment, the system comprises multiple measurement points 35, 36, 61, 62, 63, 64 or 65.

Step 320 comprises sending to the controller 20 flow information from the first flow meter 43 and pressure information from the pressure sensor for monitoring the expansion vessel 61. Step 330 comprises comparing, by the controller 20, the internal pressure of the closed liquid circulation system and the flow information to defined limits. Step 340 comprises indicating a malfunction if the defined limits are exceeded.

In one embodiment of the method the limits are defined by the artificial intelligence algorithm. The artificial intelligence algorithm, for example having the neural network for learning the pattern of the heating cycle, uses the collected and stored database information to define the pattern of normal behaviour of the expansion vessel. The limits of normal and/or abnormal behaviour are defined from the pattern. The relations affecting the pattern are, for example: time of day, inside temperature of the building, outside temperature. The artificial intelligence algorithm identifies a suspicious abnormality in the information received from at least one of the flow information, the pressure information and the temperature information. The information may be measured from any of the multiple measurement points 35, 36, 61, 62, 63, 64 or 65. Any substantial change in the closed liquid circulation system may indicate a fault or that the maintenance person has manually adjusted the system. If the change is intentional, the controller 20 may start the artificial intelligence learning algorithm to learn new patterns for the system behaviour.

The building referred hereinbefore may refer to a single-family residential building, such as a house. The residential building may contain more than one dwelling unit, being for example, a duplex, an apartment building, a condominium, a semi-detached house or a block of flats. A building is defined herein as a substantial, permanent structure.

A pressure sensor for monitoring an expansion vessel on a closed liquid circulation system is disclosed herein. The pressure sensor comprises a threaded connector configured to be attached on a gas filling valve of an expansion vessel; a second gas filling valve and a channel connecting the gas filling valve and the second gas filling valve, wherein the second gas filling valve is configured for filling the expansion vessel via the channel; and a pressure sensor configured in the channel for reading a pressure of the expansion vessel. In one embodiment, pressure sensor for monitoring an expansion vessel on a closed liquid circulation system comprises a member extending through the threaded connector for pushing a poppet valve of the gas filling valve when the pressure sensor is positioned on the gas filling valve. In one embodiment, pressure sensor for monitoring an expansion vessel on a closed liquid circulation system comprises means for adjusting the distance between the contact surface of the member and the poppet valve. In one embodiment, the means for adjusting the distance between the contact surface of the member and the poppet valve comprises a thread and a sleeve configured to be rotated on the thread. In one embodiment, pressure sensor for monitoring an expansion vessel on a closed liquid circulation system comprises a transceiver for communicating the measurement data to a controller. In one embodiment, the threaded valve connector is a Schraeder valve connector configured to be connected over the outer thread of the Schaeder valve. In one embodiment, the second gas filling valve is a Schraeder valve. In one embodiment, pressure sensor for monitoring an expansion vessel on a closed liquid circulation system comprises a visual indicator of the pressure reading.

Alternatively, or in addition, the controlling functionality described herein can be performed, at least in part, by one or more hardware components or hardware logic components. An example of the control system described hereinbefore is a computing-based device comprising one or more processors which may be microprocessors, controllers or any other suitable type of processors for processing computer-executable instructions to control the operation of the device in order to control one or more sensors, receive sensor data and use the sensor data. The computer-executable instructions may be provided using any computer-readable media that is accessible by a computing-based device. Computer-readable media may include, for example, computer storage media, such as memory and communications media. Computer storage media, such as memory, includes volatile and non-volatile, removable and non-removable media implemented in any method or technology for storage of information, such as computer-readable instructions, data structures, program modules or other data. Computer storage media includes, but is not limited to, RAM, ROM, EPROM, EEPROM, flash memory or other memory technology, CD-ROM, digital versatile disks (DVD) or other optical storage, magnetic cassettes, magnetic tape, magnetic disk storage or other magnetic storage devices, or any other non-transmission medium that can be used to store information for access by a computing device. In contrast, communication media may embody computer-readable instructions, data structures, program modules, or other data in a modulated data signal, such as a carrier wave, or other transport mechanism. As defined herein, computer storage media does not include communication media. Therefore, a computer storage medium should not be interpreted to be a propagating signal per se. Propagated signals may be present in a computer storage media, but propagated signals per se are not examples of computer storage media. Although the computer storage media is shown within the computing-based device, it will be appreciated that the storage may be distributed or located remotely and accessed via a network or other communication link, for example, by using a communication interface.

The system, the controller or any device within the system may comprise an input/output controller arranged to output display information to a display device which may be separate from or integral to the system, the controller or any device within the system. The input/output controller is also arranged to receive and process input from one or more devices, such as a user input device (e.g. a mouse, keyboard, camera, microphone or other sensor).

The methods described herein may be performed by software in machine-readable form on a tangible storage medium e.g. in the form of a computer program comprising computer program code means adapted to perform all the steps of any of the methods described herein when the program is run on a computer and where the computer program may be embodied on a computer-readable medium. Examples of tangible storage media include computer storage devices comprising computer-readable media, such as disks, thumb drives, memory etc. and do not only include propagated signals. Propagated signals may be present in a tangible storage media, but propagated signals per se are not examples of tangible storage media. The software can be suitable for execution on a parallel processor or a serial processor such that the method steps may be carried out in any suitable order, or simultaneously.

Any range or device value given herein may be extended or altered without losing the effect sought.

Although at least a portion of the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item refers to one or more of those items.

The steps of the methods described herein may be carried out in any suitable order, or simultaneously where appropriate. Additionally, individual blocks may be deleted from any of the methods without departing from the spirit and scope of the subject matter described herein. Aspects of any of the examples described above may be combined with aspects of any of the other examples described to form further examples without losing the effect sought.

The term 'comprising' is used herein to mean including the method blocks or elements identified, but that such blocks or elements do not comprise an exclusive list and a method or apparatus may contain additional blocks or elements.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from the spirit or scope of this specification.

## Claims

1. A pressure sensor for monitoring an expansion vessel (10) on a closed liquid circulation system, **characterized by** comprising:
a threaded connector (78) configured to be attached on a gas filling valve (71) of an expansion vessel (10);
a second gas filling valve (73) and a channel (72) connecting the gas filling valve (71) and the second gas filling valve (73), wherein the second gas filling valve (73) is configured for filling the expansion vessel (10) via the channel (72); and
a pressure sensor (80) configured in the channel (72) for reading a pressure of the expansion vessel (10).

2. A pressure sensor according to claim 1, **characterized by** comprising a member (79) extending through the threaded connector (78) for pushing a poppet valve (81) of the gas filling valve (71) when the pressure sensor (61) is positioned on the gas filling valve (71).

3. A pressure sensor according to claim 2, **characterized by** comprising means (82, 83) for adjusting the distance between the contact surface of the member (79) and the poppet valve (81).

4. A pressure sensor according to claim 3, **characterized in that** the means (82, 83) for adjusting the distance between the contact surface of the member (79) and the poppet valve (81) comprises a thread (82) and a sleeve (83) configured to be rotated on the thread (82).

5. A pressure sensor according to any of the claims 1 to 4,
**characterized by** comprising a transceiver (77) for communicating the measurement data to a controller (20).

6. A pressure sensor according to any of the claims 1 to 5,
**characterized in that** the threaded valve connector (78) is a Schraeder valve connector configured to be connected over the outer thread of the Schraeder valve.

7. A pressure sensor according to any of the claims 1 to 6,
**characterized in that** the second gas filling valve (73) is a Schraeder valve.

8. A pressure sensor according to any of the claims 1 to 7,
**characterized by** comprising a visual indicator (75) of the pressure reading.
